# EUROPÄISCHE PATENTSCHRIFT

(11) **EP 2 923 080 B1**
(45) Veröffentlichungstag und Bekanntmachung des Hinweises auf die Patenterteilung: **04.07.2018**
(21) Anmeldenummer: 13795170.3
(22) Anmeldetag: 22.11.2013
(51) Int. Cl.: F03D 7/02, F03D 80/00, F03D 1/06, F03D 17/00, F03D 9/25, F03D 13/20

(54) **VERFAHREN ZUM BETREIBEN EINER WINDENERGIEANLAGE UND WINDENERGIEANLAGE**
METHOD FOR OPERATING A WIND TURBINE, AND WIND TURBINE
PROCÉDÉ D'EXPLOITATION D'UNE ÉOLIENNE ET ÉOLIENNE

(30) Priorität: 22.11.2012 DE 102012221345
(43) Veröffentlichungstag der Anmeldung: 30.09.2015
(73) Patentinhaber: Senvion GmbH, 22297 Hamburg (DE)
(72) Erfinder: LEWEKE, Henning, 24226 Heikendorf (DE); WARFEN, Karsten, 23795 Söhren (DE)
(74) Vertreter: Wallinger Ricker Schlotter Tostmann
(86) Internationale Anmeldenummer: PCT/EP2013/003531
(87) Internationale Veröffentlichungsnummer: WO 2014/079579

(56) Entgegenhaltungen:
- WO-A1-02/075153
- DE-A1-102010 053 523
- TORBEN KNUDSEN ET AL: "Detection of excessive wind turbine tower oscillations fore-aft and sideways", AMERICAN CONTROL CONFERENCE (ACC), 2012, IEEE, 27. Juni 2012 (2012-06-27), Seiten 5795-5800, XP032244364, ISBN: 978-1-4577-1095-7

## Beschreibung

Die Erfindung betrifft ein Verfahren zum Betreiben einer Windenergieanlage mit einem Turm, einer auf dem Turm angeordneten azimutverstellbaren Gondel und einem Rotor, der wenigstens ein blattwinkelverstellbares Rotorblatt aufweist, wobei mittels wenigstens einer Messvorrichtung während des Betriebs der Windenergieanlage Turmschwingungen erfasst und überwacht werden und der Leistungsbetrieb der Windenergieanlage abgeschaltet wird, wenn eine Messgröße, insbesondere ein gleitender Mittelwert, der Turmschwingungen einen Turmschwingungsgrenzwert überschreitet. Ferner betrifft die Erfindung eine Windenergieanlage.

Entsprechende Windenergieanlagen mit einem Turm, auf dessen Spitze eine Gondel mit einem Rotor angeordnet ist, sind sehr schwingungsfreudige Gebilde. Anregungen von Schwingungen können durch Asymmetrien in der Anlage, beispielsweise Blattfehlstellungen, aerodynamische oder mechanische Unwuchten oder durch den Turmvorstau entstehen, aber auch durch widrige Umgebungsbedingungen, beispielsweise außergewöhnliche Turbulenzen außerhalb der Design-Spezifikationen, durch Eisansatz oder durch variable Anströmbedingungen. Diese Turmschwingungen belasten im Laufe des Betriebs einer Windenergieanlage das Material des Turms und sind bei der Auslegung der Belastbarkeit des Turms für eine geplante Lebensdauer des Turms berücksichtigt.

Um zu verhindern, dass Turmschwingungen auftreten, die über das akzeptable Maß hinaus den Turm belasten, werden Turmschwingungen üblicherweise überwacht und der Lastbetrieb der Anlage abgeschaltet, wenn ein fest vorgegebener Grenzwert, der anlagenspezifisch ist, überschritten wird. Auf diese Weise wird verhindert, dass übermäßige Schwingungsereignisse die Lebensdauer des Turms über ein tolerierbares Maß verkürzt.

Bisher werden üblicherweise zwei fest parametrierte Abschaltschwellen zur Turmbeschleunigung, eine mit kurzer Abschaltzeit, beispielsweise ein bis zwei Halbschwingungen des Turms und mit einem höheren Grenzwert, und eine mit etwas längerer Abschaltzeit, etwa fünf bis sechs Halbschwingungen und einem niedrigen Grenzwert implementiert. Da übliche Turmeigenfrequenzen bei 0,2 bis 0,5 Hz liegen, beträgt die beobachtete Dauer somit für den kurzen Zeitraum 2,5 bis 5 Sekunden und für den längeren Zeitraum 7,5 bis 15 Sekunden. Dabei müssen die Grenzwerte so hoch parametriert sein, dass auch bei Abschaltwind im Normalfall keine Auslösung erfolgt, also bei hohen Windgeschwindigkeiten, bei denen die Windenergieanlage regelmäßig abgeschaltet wird. Weiterhin ist es im Stand der Technik bekannt, beim Auftreten von hohen Schwingungsniveaus die Leistung und/oder Drehzahl einer Windenergieanlage zu reduzieren, um ohne Abschaltung das Schwingungsniveau zu reduzieren.

Aus WO 02/075153 A1 ist ein Verfahren zur Steuerung einer Windenergieanlage bekannt, bei welchem die Beschleunigung des Turmes erfasst wird. Um eine zuverlässige und effiziente Schwingungsüberwachung zu verwirklichen, sind Mittel zur Erfassung der Turmschwingung, des Schwingwegs und/oder der absoluten Auslenkung des Turms im oberen Teil des Turms aus seiner Ruhelage umfasst und die davon ermittelten Werte werden derart verarbeitet, dass die Betriebsführung der Windenergieanlage oder Teile hiervon verändert wird, wenn die Schwingung und/oder die absolute Auslenkung des Turms einen vorgebbaren ersten Grenzwert überschreitet und zwei Schwingwege in wenigstens zwei verschiedenen Richtungen in einer im Wesentlichen horizontalen Ebene erfasst werden.

Demgegenüber liegt die der vorliegenden Erfindung zugrunde liegende Aufgabe darin, eine Windenergieanlage auf einfache Art und Weise bei wenigstens gleichbleibender Sicherheit in ihrer Wirtschaftlichkeit zu verbessern.

Diese Aufgabe wird durch ein Verfahren zum Betreiben einer Windenergieanlage mit einem Turm, einer auf dem Turm angeordneten azimutverstellbaren Gondel und einem Rotor, der wenigstens ein blattwinkelverstellbares Rotorblatt aufweist, gelöst, wobei mittels wenigstens einer Messvorrichtung während des Betriebs der Windenergieanlage Turmschwingungen erfasst und überwacht werden und der Leistungsbetrieb der Windenergieanlage abgeschaltet wird, wenn eine Messgröße, insbesondere ein gleitender Mittelwert, der Turmschwingungen einen Turmschwingungsgrenzwert überschreitet, das dadurch weitergebildet ist, dass wenigstens während eines Lastbetriebs der Windenergieanlage der Turmschwingungsgrenzwert als wenigstens eine Grenzwertfunktion definiert ist, die von, insbesondere einem gleitenden Mittelwert, der herrschenden Windgeschwindigkeit und/oder einem mit der Windgeschwindigkeit verbundenen Parameter abhängig ist und in mehreren verschiedenen Wertebereichen der Windgeschwindigkeit oder des damit verbundenen Parameters unterschiedliche funktionelle Abhängigkeiten aufweist. Dabei kann es sich um einen gleitenden Mittelwert des Parameters handeln. Verbundene Parameter sind unter anderem die Generatorleistung oder der Rotorblattwinkel.

Mit dem Übergang von bisher verwendeten konstanten Grenzwerten zu einer windgeschwindigkeitsabhängigen Grenzwertfunktion ist es nunmehr möglich, abhängig von der Windgeschwindigkeit den Grenzwert so zu parametrieren, dass nunmehr auch dauerhaft auftretende, nur leicht erhöhte Schwingungsamplituden detektiert werden, die den Turm aufgrund ihrer Dauerhaftigkeit verstärkt belasten und seine Lebensdauer bzw. Betriebsdauer herabsetzen. Damit wird auf einfache Art und Weise der bislang existierende Auslegungskonflikt für die Grenzwerte beseitigt, der der Anlage bislang bei Starkwind aufgrund vermehrter Auslösungen Verfügbarkeit kostete und in Schwachwindzeiten ermüdungslastenschädigende Schwingungen nicht erkennbar machte.

Dadurch, dass die Windgeschwindigkeit bzw. der damit verbundene Parameter in mehrere Wertebereiche aufgeteilt wird, in denen jeweils unterschiedliche funktionelle Abhängigkeiten des Turmschwingungsgrenzwerts herrschen, ist es möglich, verschiedene Betriebszustände der Windenergieanlage angemessen zu berücksichtigen, etwa das Anfahren, den Teillastbetrieb, den Volllastbetrieb und das Abschalten nahe einer Abschaltgeschwindigkeit des Windes. Unter "mehrere Wertebereiche" werden im Rahmen der Erfindung wenigstens zwei Wertebereiche verstanden. Es können auch drei, vier, fünf oder mehr Wertebereiche mit eigenen funktionalen Abhängigkeiten einschließlich konstanter Werte vorgesehen sein. Geeignete funktionelle Abhängigkeiten sind auch lineare oder quadratische Funktionen, gegebenenfalls auch Splines, die abschnittsweise definiert sind.

Übergänge des Turmschwingungsgrenzwerts zwischen verschiedenen Wertebereichen sind vorzugsweise stetig, also ohne Sprünge. Dies bedeutet, dass sich eine durchgehende Funktionslinie ergibt. Der Übergang geht entweder mit einer abrupten Änderung der Funktion in der ersten Ableitung einher oder es wird eine Glättung des Übergangs in einem Übergangsbereich zwischen den aneinander angrenzenden Wertebereichen der Windgeschwindigkeit oder des davon abhängigen Parameters vorgenommen.

Auch ist es nunmehr möglich, in einer ungestörten Anlage auftretende, tolerierbare Schwingungspegel, die stark von den Umgebungsbedingungen abhängig sind, zu verarbeiten. So treten bei Betrieb der Anlage nahe Abschaltgeschwindigkeit üblicherweise starke Schwingungspegel auf, die aber aufgrund der niedrigeren Auftretenshäufigkeit dieses Zustands über die Lebensdauer gesehen nicht kritisch sind. Würden diese Schwingungspegel aber bei Nennwind beispielsweise auftreten, würden sie auf Dauer die Windenergieanlage zu stark schädigen. So kann in der Nähe der Abschaltgeschwindigkeit ein höherer Grenzwert verwendet werden als bei Nennwindgeschwindigkeit, um die Zustände aufzufangen.

Ferner ist es nunmehr auch möglich, außergewöhnliche Betriebszustände, wie beispielsweise eine Vereisung des Rotors, zu berücksichtigen. Ein höheres Lastenniveau der Anlage in diesen Betriebszuständen zum Beispiel durch unregelmäßige Vereisung und dadurch Unwucht, die vermehrt zu Schwingungen führt, die aber üblicherweise nur kurzzeitig andauern, lässt sich damit ebenfalls verarbeiten. So ist in diesen Fällen eine zeitlich begrenzte Erhöhung des Grenzwertes bzw. der Abschaltschwelle zulässig, die in der Funktion berücksichtigt werden kann.

Um die Windgeschwindigkeitsabhängigkeit des Grenzwerts zu modellieren, ist es vorteilhafterweise vorgesehen, dass der Wert der Grenzwertfunktion bei niedrigen Windgeschwindigkeiten, insbesondere unterhalb einer Startgeschwindigkeit v_{Start} der Windenergieanlage, einem ersten Grenzwert a_{Grenz0} entspricht oder unterhalb des ersten Grenzwerts a_{Grenz0} verläuft, zu mittleren Windgeschwindigkeiten hin, insbesondere zwischen v_{Start} und einem ersten Windgeschwindigkeitsgrenzwert v_{Wind0} mit v_{Wind0} > v_{Start}, abnimmt und zu hohen Windgeschwindigkeiten hin, insbesondere zwischen einem zweiten Windgeschwindigkeitsgrenzwert v_{Wind1} und einem dritten Windgeschwindigkeitsgrenzwert v_{Wind2}, mit v_{Wind2} > v_{Wind1} > v_{Wind0}, bis auf einen Wert zunimmt, der größer als der Grenzwert a_{Grenz0} ist.

Diese Definition schließt die Alternativen ein, dass im Bereich der Startgeschwindigkeit der Grenzwert a_{Grenz0} konstant ist, und dass der Grenzwert in diesem Bereich veränderlich ist, beispielsweise eine mit der Windgeschwindigkeit oder dem davon abhängigen Parameter ansteigende oder abfallende Rampe, wobei a_{Grenz0} für diesen Fall eine Obergrenze definiert. Ebenso ist es umfasst, dass bei hohen Windgeschwindigkeiten der Grenzwert ein Maximum erreicht, das größer ist als a_{Grenz0}, um dann wieder abzufallen. Das Maximum kann aber auch konstant gehalten werden oder über einen begrenzten Windgeschwindigkeitsbereich konstant sein, bevor der Grenzwert zu noch höheren Windgeschwindigkeiten hin wieder abfällt.

Der niedrigste Teil der Grenzwertfunktion befindet sich im mittleren Windgeschwindigkeitsbereich, insbesondere zwischen v_{Wind0} und v_{Wind1}. Auch in diesem Bereich kann die Grenzwertfunktion entweder konstant sein oder sich weiter leicht verändern, insbesondere bis zu v_{Wind1} abnehmen. Im letztgenannten Fall ändert sich beispielsweise die Steigung der Kurve bei v_{Wind0} deutlich und flacht ab. Der genannte Verlauf dient somit als Kennzeichnung einer Kurvenschar, die die entsprechenden Stützpunkte gemeinsam hat, wobei die Stützpunkte anlagenspezifisch bestimmt oder bestimmbar sind.

Auf diese Weise ist es möglich, in dem Bereich, in dem die Windenergieanlage die meiste Zeit betrieben wird, nämlich im oberen Teillastbereich, also bei mittleren Windgeschwindigkeiten, einen niedrigen Grenzwert zu modellieren, mit dem außergewöhnliche und dauerhafte Schwingungszustände erkannt werden können. Bei hohen Windgeschwindigkeiten darf die Schwelle nicht zu niedrig sein, so dass die Grenzwertfunktion bei hohen Windgeschwindigkeiten auf einen größeren Wert zunimmt, der gegebenenfalls gleich dem bisher verwendeten höheren Grenzwert ist. Bei Startgeschwindigkeit sind ebenfalls für eine kurze Zeit höhere Turmschwingungen beim Anlaufen und im Teillastbetrieb der Anlage zu erwarten, da die Rotordrehzahl dann dicht an der Turmeigenfrequenz liegt, so dass auch bei den niedrigen Windgeschwindigkeiten ein höherer Grenzwert angesetzt wird als bei mittleren Windgeschwindigkeiten, für die die Anlage ausgelegt ist.

Um außergewöhnliche Betriebszustände berücksichtigen zu können, ist die Grenzwertfunktion von wenigstens einem zweiten Parameter für eine oder mehrere meteorologische Sonderbedingungen und/oder Betriebssonderbedingungen abhängig, wobei die Grenzwertfunktion insbesondere einen konstanten oder windgeschwindigkeitsabhängigen Korrekturterm a_{GrenzOffset} umfasst, der bei Auftreten von meteorologischen Sonderbedingungen oder Betriebssonderbedingungen zum Turmschwingungsgrenzwert hinzuaddiert wird.

Eine meteorologische Sonderbedingung ist beispielsweise eine Vereisung des Rotorblatts oder der Rotorblätter oder ein Betrieb im Nachlauf (Wake) einer vorstehenden bzw. davorstehenden Windenergieanlage. Der Wake-Betrieb ist windrichtungsabhängig. Entsprechende zweite Parameter sind ein Vereisungsmaß und/oder ein Maß für eine Nachlauf-Turbulenz. Betriebssonderbedingungen sind beispielsweise eine Leistungsdrosselung oder Drehzahlreduzierung aufgrund von Schall-, Netz- oder sonstigen Restriktionen. Der zweite Parameter ist dann ein Maß für die Leistungsdrosselung und/oder die Drehzahlreduzierung.

Da solche außergewöhnlichen Betriebszustände ebenfalls zwar zu stärkeren Turmschwingungen führen, jedoch üblicherweise nur für zeitlich stark begrenzte Zeiträume auftreten, kann in diesen Fällen im einfachsten Fall ein positiver additiver Term zur Funktion hinzugefügt werden, der entweder konstant oder windgeschwindigkeitsabhängig ist. Beispielsweise bei einer Vereisung der Rotorblätter kann die Funktion mit einem windgeschwindigkeitsabhängigen Offset, dessen Wert mit steigender Windgeschwindigkeit abnimmt, definiert sein, um die Windenergieanlage bei hohen Windgeschwindigkeiten nicht durch zu große Zusatzlasten zu gefährden. Auch Offsets, die aufgrund von Anströmbedingungen oder Turbulenz eingeführt werden, können windgeschwindigkeitsabhängig sein. Eine einfachere Möglichkeit ist allerdings ein konstanter Term, der bei Entfall der besonderen Betriebsbedingung wieder aus der Funktion entfallen kann.

Weiterhin ist vorteilhaft vorgesehen, bei einem Wechsel von einem Betriebszustand zu einem anderen für einen kurzen Zeitraum einen positiven additiven Term hinzuzufügen. Der Zeitraum kann vorteilhaft eine bis 10 Minuten betragen. Hiermit wird dem Effekt Rechnung getragen, dass bei einem Wechsel des Betriebszustands ein erhöhtes Schwingungsniveau auftritt, welches sich dann binnen weniger Minuten stabilisiert. Alternativ kann die Schwingungsüberwachung mit einem ausreichend großen Mittelwert, z.B. 5 oder 10 Minuten, versehen werden. Der Wechsel des Betriebszustandes stellt insbesondere auch eine Betriebssonderbedingung dar, so dass in diesem Fall der additive Term mit dem Offset a_{GrenzOffset} identifiziert wird.

Es ist bevorzugt, wenn der Wert der Grenzwertfunktion einen kleinsten ersten Grenzwert a_{Grenz1} nicht unterschreitet, der insbesondere bei einer mittleren Windgeschwindigkeit oder in einem mittleren Windgeschwindigkeitsbereich angewendet wird. Damit wird auch mit der erfindungsgemäßen Grenzwertfunktion vermieden, dass eine ungewünschte zu häufige Abschaltung der Anlage erfolgt.

Ebenfalls ist es vorteilhaft, wenn der Wert der Grenzwertfunktion einen größten zweiten Grenzwert a_{Grenz2} nicht überschreitet, der insbesondere bei großen Windgeschwindigkeiten angewendet wird. Der größte zweite Grenzwert begrenzt die Turmschwingungen absolut und dient auch der Sicherheit der Anlage.

Vorteilhafterweise ist eine Mittelungsdauer für die Turmschwingungen größer als eine Mittelungsdauer für die herrschende Windgeschwindigkeit, insbesondere um wenigstens einen Faktor 5, insbesondere um wenigstens einen Faktor 10. Die Mittelungsdauer für die Turmschwingungen kann vergleichsweise lang gewählt sein, da damit die Dauerbelastungen des Turms stärker berücksichtigt werden, die die Lebensdauer des Turms stärker beeinträchtigen können als einzelne Ausschläge. Demgegenüber kann die Windgeschwindigkeit über einen kürzeren Zeitraum gemittelt werden, damit zu jedem Zeitpunkt ein angemessener Grenzwert aus der Grenzwertfunktion als Vergleichsbarometer zur Verfügung steht. Gleichzeitig kann auch die bisher verwendete Überwachung mit Grenzwerten für eine Mittelungsdauer von wenigen Turmhalbschwingungen weiter betrieben werden, um gefährliche Einzelschwingungsereignisse abzufangen.

Vorzugsweise wird der gleitende Mittelwert der Turmschwingungen über eine Dauer von mehreren Minuten, insbesondere zwischen 2 und 20 Minuten, gemittelt und/oder der gleitende Mittelwert der herrschenden Windgeschwindigkeit über eine Dauer von mehreren Sekunden, insbesondere zwischen 10 und 60 Sekunden, gemittelt. Diese Zeitbereiche bieten für eine große Vielfalt von Windenergieanlagen Anhaltspunkte für eine günstige Auslegung des Verfahrens. Die konkreten Gleitzeiträume bzw. Mittelungszeiträume sowie die Grenzwerte und der Verlauf der Funktion lassen sich in der Designphase durch rechnerische Simulationen bestimmen und können vorzugsweise nach Installation und Inbetriebnahme der Windenergieanlage vor Ort entsprechend den vorherrschenden Standortbedingungen angepasst werden.

Zur Auswertung der Windgeschwindigkeit hat es sich als vorteilhaft bewährt, zusätzlich zu dem oben genannten kurzzeitigen Mittelwert einen langzeitigen Mittelwert vorzusehen. Vorzugsweise erfolgt die Ermittlung der Windgeschwindigkeit als Maximum aus einem 30-Sekunden-Mittelwert und einem 10-Minuten-Mittelwert. Alternativ zur Mittelwertbildung sind auch andere Filterungen der Messwerte vorteilhaft anwendbar, insbesondere Tiefpassfilter.

Als Messgröße für die Turmschwingungen wird vorzugsweise eine Turmbeschleunigung gemessen. Auch andere Messgrößen mit beispielsweise Dehnungsmessstreifen am Turm oder anderen bekannten Messgeräten, mit denen eine Schwingungsamplitude, Schwingungsbeschleunigung oder Ähnliches messbar ist, sind erfindungsgemäß einsetzbar.

In einer vorteilhaften Weiterbildung werden für Turmschwingungen in Richtung der Rotorachse und für Turmschwingungen in einer Ebene senkrecht zur Rotorachse zwei unterschiedliche Grenzwertfunktionen angewandt. Auf diese Weise wird berücksichtigt, dass sowohl die anregenden Kräfte als auch die Dämpfungen, die auf den Turm einwirken, parallel zur Windrichtung und quer zur Windrichtung unterschiedlich sind, so dass auch unterschiedliche Grenzwerte für die Turmschwingungen in diese Richtungen bzw. für die Schwingungskomponenten in diese Richtungen anwendbar sind.

Der Überwachungs- und Berechnungsalgorithmus ist aus Sicherheitsgründen vorzugsweise in die Software einer Betriebssteuerungseinrichtung der Windenergieanlage integriert. Alternativ erfolgt die Überwachung vorteilhafterweise im Rahmen einer Fernüberwachung, beispielsweise einer Fernüberwachung eines Windenergieanlagenparks.

Die der Erfindung zugrunde liegende Aufgabe wird auch durch eine Windenergieanlage mit einem Turm, einer auf dem Turm angeordneten azimutverstellbaren Gondel und einem Rotor, der wenigstens ein blattwinkelverstellbares Rotorblatt aufweist, wenigstens einer Messvorrichtung, die zur Erfassung von Turmschwingungen ausgebildet und angeordnet ist, sowie einer Betriebssteuerungseinrichtung, die insbesondere eine Datenverarbeitungsanlage mit einer Betriebssteuerungssoftware umfasst, die zur Überwachung der Turmschwingungen und zur Abschaltung eines Leistungsbetriebs der Windenergieanlage bei Überschreitung eines Turmschwingungsgrenzwerts durch einen gleitenden Mittelwert der Turmschwingungen eingerichtet ist, gelöst, die dadurch weitergebildet ist, dass in der Betriebssteuerungseinrichtung, insbesondere der Betriebssteuerungssoftware, wenigstens eine Grenzwertfunktion als Turmschwingungsgrenzwert definiert ist, die von, insbesondere einem gleitenden Mittelwert, der herrschenden Windgeschwindigkeit abhängig ist. Diese Windenergieanlage ist vorzugsweise, insbesondere mittels der Betriebssteuerungssoftware, ausgebildet, ein zuvor beschriebenes erfindungsgemäßes Verfahren auszuführen.

Gegenüber dem bisher verfolgten, sehr groben Konzept der Schwingungsüberwachung kann mit den Erfindungsgegenständen auf einfache und sichere Art und Weise eine über das normale Maß hinausgehende Schädigung der Windenergieanlage, wie beispielsweise durch mäßig starke Unwuchten, erkannt werden und es kann darauf reagiert werden. Die Überwachung kann so eingestellt werden, dass für Lastsituationen mit großer Häufigkeit engere Grenzen gelten als für einzelne kurze Ereignisse, beispielsweise Starkwindereignisse, die zwar große Amplituden haben, sich aber aufgrund der niedrigen Auftretungshäufigkeit kaum in der Betriebsfestigkeit niederschlagen.

Vorteil ist somit zum einen eine höhere Verfügbarkeit bei Schwachwind und Starkwind und somit eine Verbesserung der Wirtschaftlichkeit und zum anderen die Einführung einer genaueren Überwachung, die zum Beispiel spätestens für den Betrieb unter Sonderbedingungen wie beispielsweise Eis sehr vorteilhaft ist.

Ebenfalls wird der Betrieb einer Windenergieanlage erstmals auf einfache Art und Weise in die Lage versetzt, über die Überwachungsebene der Turmschwingungen auch Fehler, und insbesondere die Lebensdauer signifikant verkürzende Fehler, in Regelungssystemen, also der Software, der Hardware sowie in den Kalibrierungen durch das Personal, wie beispielsweise in der Turmdämpfungsregelung, zu erkennen.

Da eine Windenergieanlage für eine bestimmte Windklasse gerechnet wird, bietet dieses Verfahren durch die Festlegung der Kennlinie, also der Grenzwertfunktion, die Möglichkeit, eine Überwachung nach Spezifikation einzurichten.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnung beschrieben, wobei bezüglich aller im Text nicht näher erläuterten erfindungsgemäßen Einzelheiten ausdrücklich auf die Zeichnung verwiesen wird. Es zeigt:

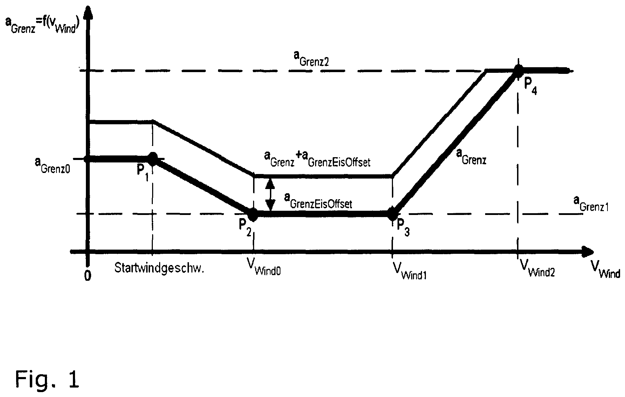

- Fig. 1: ein Diagramm einer erfindungsgemäßen Grenzwertfunktion a_{Grenz}.

Der Grenzwert a_{Grenz} ist auf der Y-Achse des Diagramms aufgetragen, die Windgeschwindigkeit v_{Wind} auf der X-Achse. Der mögliche Bereich von Grenzwerten ist durch einen unteren Grenzwert a_{Grenz1} und einem oberen Grenzwert a_{Grenz2} eingeschränkt, über die hinaus die Grenzwertfunktion a_{Grenz} nicht nach oben bzw. nach unten abweicht.

Bei einer Windgeschwindigkeit unterhalb der Startwindgeschwindigkeit, die windenergieanlagenabhängig bei wenigen Metern pro Sekunde liegt, beträgt der mit einer fetten Linie gekennzeichnete Basiswert der Funktion a_{Grenz} einen Wert a_{Grenz0} und ist konstant. Der Endpunkt dieses konstanten Bereichs der Funktion ist mit P₁ gekennzeichnet. An diesem Punkt beträgt der Grenzwert a_{Grenz0} abhängig vom Windenergieanlagentyp normalerweise zwischen 5 und 30 mG (die Einheit mG bezeichnet ein Tausendstel der Erdbeschleunigung). Analog kann die Turmbeschleunigung als Messgröße für Turmschwingungen auch durch geeignete andere Messgrößen ersetzt werden, etwa Dehnungsmessstreifen, Positionssensoren o.ä.

Zwischen den Punkten P₁ und P₂, also bei Windgeschwindigkeiten zwischen der anlagenspezifischen Startwindgeschwindigkeit und einer Windgeschwindigkeit v_{Wind0}, die in etwa einem unteren drehzahlvariablen Bereich entspricht, nimmt der Wert der Grenzwertfunktion stetig, und im Ausführungsbeispiel linear, ab, bis bei Punkt P₂ der untere Grenzwert a_{Grenz1} erreicht wird. Anlagenabhängig beträgt die Windgeschwindigkeit v_{Wind0} zwischen 3 und 10 m/s und kann beispielsweise bis zur Nennwindgeschwindigkeit v_{rated} als Wert für v_{Wind0} gehen. An Punkt P₂ ist der untere Grenzwert a_{Grenz1} erreicht, der, anlagenspezifisch, zwischen 3 und 30 mG beträgt. Vorteilhafterweise ist er kleiner als der Wert a_{Grenz0}.

Im Beispiel gemäß Fig. 1 ist der Wert der Grenzwertfunktion a_{Grenz} zwischen den Punkten P₂ und P₃ auf dem Wert a_{Grenz1} konstant, wobei der Punkt P₃ einer Windgeschwindigkeit v_{Wind1} entspricht, die, anlagenspezifisch, zwischen 10 und 15 m/s beträgt und etwa dem Nennwind für die Windenergieanlage entspricht.

Jenseits der Nennwindgeschwindigkeit bzw. Windgeschwindigkeit v_{Wind1} steigt der Wert der Funktion a_{Grenz} wiederum stetig, und im Ausführungsbeispiel linear, an bis zum Punkt P₄, an dem der obere Grenzwert a_{Grenz2} erreicht wird, der im Regelfall zwischen 10 und 40 mG beträgt. Oberhalb des Punktes P₄ ist der Wert der Grenzwertfunktion a_{Grenz} dann auf diesen Wert a_{Grenz2} konstant. Die Windgeschwindigkeit v_{Wind2} am Punkt P₄ beträgt ca. 22 bis 30 m/s und entspricht in etwa der Abschaltgeschwindigkeit der Windenergieanlage und sollte größer sein als die Nennwindgeschwindigkeit.

Mit einer etwas dünneren Linie ist die Funktion a_{Grenz} dargestellt, bei der ein konstanter Offset a_{GrenzEisOffset} hinzuaddiert ist, die bei einem Vereisungszustand der Rotorblätter der Windenergieanlage berücksichtigt wird. In diesem Fall treten für eine relativ kurze Zeit größere Unwuchten und größere Turmschwingungszustände auf. Um in diesem Fall nicht zu einer unerwünschten und unnötigen Abschaltung der Windenergieanlage zu kommen, wird durch den Offset a_{GrenzEis-Offset} die Grenzwertfunktion a_{Grenz} angehoben. Auch mit dem Offset a_{GrenzEisOffset} endet die Kurve im Maximum beim oberen Grenzwert a_{Grenz2}, der allerdings bei geringeren Windgeschwindigkeiten in diesem Fall bereits erreicht wird, also vor Erreichen von v_{Wind2}.

Eine bevorzugte Weiterbildung sieht hierbei einen mit der Windgeschwindigkeit bzw. einem damit verbundenen Parameter veränderlichen Offset vor. Um große Schwingungsamplituden zu reduzieren ist hierbei bevorzugt vorgesehen, den Offset im Bereich zwischen v_{Wind1} u. v_{Wind2} kontinuierlich zu reduzieren, so dass der Grenzwert a_{Grenz2} erst bei v_{Wind2}, also im Punkt P4 erreicht wird.

Das in Fig. 1 dargestellte Ausführungsbeispiel mit mehreren linearen Kurvenstücken, die stetig aneinander gesetzt sind, bildet ein besonders einfach zu implementierendes Verfahren. Alternativ kann natürlich auch eine andere Funktion gewählt werden, die weniger oder keine Knicke aufweist, beispielsweise eine spline-interpolierte Funktion über mehrere Stützpunkte oder eine vollständig auch in erster und gegebenenfalls auch zweiter Ableitung stetige Funktion.

In nachstehender Tabelle sind die Parameterbereiche der Figur erläutert. Mit X-Richtung sind die Schwingungen in Rotorachsrichtung, mit Y quer zur Rotorachse bezeichnet. Für jeden einzelnen Parameter umfasst eine bevorzugte Ausführungsform die Wahl des Parameters im Bereich zwischen Minimum und Maximum. In besonders bevorzugten Ausführungsformen wird ein einzelner oder eine Auswahl von Parametern im Bereich des "Normalbereichs" eingestellt.

| Parameter | Einheit | MIN | Normalbereich | MAX | Hinweis |
|---|---|---|---|---|---|
| v_{Wind0} | m/s | v_{Start} | 3-10 | v_{Rated} | 2) |
| a_{Grenz0} | mG | 10 | 5-30 | 50 | 1) |
| v_{Wind1} | m/s | >a₀ | 10-15 | 20 | 3) |
| a_{Grenz1} | mG | ≤a₀ | 3-30 | 50 | |
| v_{Wind2} | m/s | v_{Rated} | 22-30 | 30 | 4) |
| a_{Grenz2} | mG | 10 | 10-40 | 50 | |
| a_{GrenzEisOffset} | mG | 0 | 3-20 | 30 | |

Dabei bedeutet der Hinweis 1), dass der Grenzwert gegebenenfalls nabenhöhenabhängig ist, 2) den unteren drehzahlvariablen Bereich, 3) den Bereich des Nennwinds und 4) die Abschaltgeschwindigkeit. Die Parameter v_{Wind0}, v_{Wind1} und v_{Wind2} stellen den ersten, zweiten und dritten Windgeschwindigkeitswert der Kennlinie der maximal zulässigen Turmschwingung dar, während a_{Grenz0}, a_{Grenz1} und a_{Grenz2} jeweils den ersten, zweiten und dritten Grenzwert der Kennlinie der maximal zulässigen Turmschwingung bezeichnen. a_{GrenzEisOffset} stellt den Offset für maximal zulässige Turmschwingungen bei der Sonderbedingung der Vereisung der Rotorblätter dar. Die einzelnen Parameter können jeweils für die X- und Y-Richtung parallel und quer zur Rotordrehachse unterschiedlich definiert sein.

## Patentansprüche

1. Verfahren zum Betreiben einer Windenergieanlage mit einem Turm, einer auf dem Turm angeordneten azimutverstellbaren Gondel und einem Rotor, der wenigstens ein blattwinkelverstellbares Rotorblatt aufweist, wobei mittels wenigstens einer Messvorrichtung während des Betriebs der Windenergieanlage Turmschwingungen erfasst und überwacht werden und der Leistungsbetrieb der Windenergieanlage abgeschaltet wird, wenn eine Messgröße, insbesondere ein gleitender Mittelwert, der Turmschwingungen einen Turmschwingungsgrenzwert überschreitet, **dadurch gekennzeichnet, dass** wenigstens während eines Lastbetriebs der Windenergieanlage der Turmschwingungsgrenzwert als wenigstens eine Grenzwertfunktion definiert ist, die von, insbesondere einem gleitenden Mittelwert, der herrschenden Windgeschwindigkeit und/oder einem mit der Windgeschwindigkeit verbundenen Parameter abhängig ist und in mehreren verschiedenen Wertebereichen der Windgeschwindigkeit oder des damit verbundenen Parameters unterschiedliche funktionelle Abhängigkeiten aufweist.

2. Verfahren nach Anspruch 1, **dadurch gekennzeichnet, dass** der Wert der Grenzwertfunktion bei niedrigen Windgeschwindigkeiten unterhalb von 3 bis 10 m/s, insbesondere unterhalb einer Startgeschwindigkeit v_{Start} der Windenergieanlage, einem ersten Grenzwert a_{Grenz0} entspricht oder unterhalb des ersten Grenzwerts a_{Grenz0} verläuft, zu mittleren Windgeschwindigkeiten hin, insbesondere zwischen v_{Start} und einem ersten Windgeschwindigkeitsgrenzwert v_{Wind0} mit v_{Wind0} > v_{Start}, abnimmt und zu hohen Windgeschwindigkeiten hin, insbesondere zwischen einem zweiten Windgeschwindigkeitsgrenzwert v_{Wind1} und einem dritten Windgeschwindigkeitsgrenzwert v_{Wind2}, mit v_{Wind2} > v_{Wind1} > v_{Wind0}, bis auf einen Wert zunimmt, der größer als der Grenzwert a_{Grenz0} ist.

3. Verfahren nach Anspruch 1 oder 2, **dadurch gekennzeichnet, dass** die Grenzwertfunktion von wenigstens einem zweiten Parameter für eine oder mehrere meteorologische Sonderbedingungen und/oder Betriebssonderbedingungen abhängig ist, wobei die Grenzwertfunktion insbesondere einen konstanten oder windgeschwindigkeitsabhängigen Korrekturterm a_{GrenzOffset} umfasst, der bei Auftreten von meteorologischen Sonderbedingungen oder Betriebssonderbedingungen zum Turmschwingungsgrenzwert hinzuaddiert wird.

4. Verfahren nach einem der Ansprüche 1 bis 3, **dadurch gekennzeichnet, dass** bei einem Wechsel von einem Betriebszustand zu einem anderen für 1 bis 10 Minuten ein positiver additiver Term oder Offset hinzugefügt wird.

5. Verfahren nach einem der Ansprüche 1 bis 4, **dadurch gekennzeichnet, dass** der Wert der Grenzwertfunktion einen kleinsten ersten Grenzwert a_{Grenz1} nicht unterschreitet, der insbesondere bei einer mittleren Windgeschwindigkeit oder in einem mittleren Windgeschwindigkeitsbereich angewendet wird.

6. Verfahren nach einem der Ansprüche 1 bis 5, **dadurch gekennzeichnet, dass** der Wert der Grenzwertfunktion einen größten zweiten Grenzwert a_{Grenz2} nicht überschreitet, der insbesondere bei großen Windgeschwindigkeiten angewendet wird.

7. Verfahren nach einem der Ansprüche 1 bis 6, **dadurch gekennzeichnet, dass** eine Mittelungsdauer für die Turmschwingungen größer ist als eine Mittelungsdauer für die herrschende Windgeschwindigkeit, insbesondere um wenigstens einen Faktor 5, insbesondere um wenigstens einen Faktor 10.

8. Verfahren nach einem der Ansprüche 1 bis 7, **dadurch gekennzeichnet, dass** der gleitende Mittelwert der Turmschwingungen über eine Dauer von mehreren Minuten, insbesondere zwischen 2 und 20 Minuten, gemittelt wird und/oder der gleitende Mittelwert der herrschenden Windgeschwindigkeit über eine Dauer von mehreren Sekunden, insbesondere zwischen 10 und 60 Sekunden, gemittelt wird.

9. Verfahren nach einem der Ansprüche 1 bis 8, **dadurch gekennzeichnet, dass** als Messgröße für die Turmschwingungen eine Turmbeschleunigung gemessen wird.

10. Verfahren nach einem der Ansprüche 1 bis 9, **dadurch gekennzeichnet, dass** für Turmschwingungen in Richtung der Rotorachse und für Turmschwingungen in einer Ebene senkrecht zur Rotorachse zwei unterschiedliche Grenzwertfunktionen angewandt werden.

11. Windenergieanlage mit einem Turm, einer auf dem Turm angeordneten azimutverstellbaren Gondel und einem Rotor, der wenigstens ein blattwinkelverstellbares Rotorblatt aufweist, wenigstens einer Messvorrichtung, die zur Erfassung von Turmschwingungen ausgebildet und angeordnet ist, sowie einer Betriebssteuerungseinrichtung, die insbesondere eine Datenverarbeitungsanlage mit einer Betriebssteuerungssoftware umfasst, die zur Überwachung der Turmschwingungen und zur Abschaltung eines Leistungsbetriebs der Windenergieanlage bei Überschreitung eines Turmschwingungsgrenzwerts durch einen gleitenden Mittelwert der Turmschwingungen eingerichtet ist, **dadurch gekennzeichnet, dass** in der Betriebssteuerungseinrichtung, insbesondere der Betriebssteuerungssoftware, wenigstens eine Grenzwertfunktion als Turmschwingungsgrenzwert definiert ist, die von, insbesondere einem gleitenden Mittelwert, der herrschenden Windgeschwindigkeit und/ oder einem mit der Windgeschwindigkeit verbundenen Parameter abhängig ist und in mehreren verschiedenen Wertebereichen der Windgeschwindigkeit oder des damit verbundenen Parameters unterschiedliche funktionelle Abhängigkeiten aufweist.

12. Windenergieanlage nach Anspruch 11, **dadurch gekennzeichnet, dass** die Betriebssteuerungseinrichtung, insbesondere mittels der Betriebssteuerungssoftware, ausgebildet ist, ein Verfahren nach einem der Ansprüche 1 bis 10 auszuführen.

## Claims

1. Method to operate a wind turbine with a tower, an azimuth adjustable nacelle arranged on the tower and a rotor, which comprises at least one blade angle adjustable rotor blade, wherein tower oscillations are measured and monitored by at least one measuring device during the operation of the wind turbine and the power operation of the wind turbine is shut down, if a measurand, in particular a moving average, of the tower oscillations exceeds a tower oscillation limit value, **characterized in that** at least during a load operation of the wind turbine the tower oscillation limit value is defined as at least one limit function, which depends on, in particular a moving average of, the current wind speed and/or a parameter related to the wind speed and which comprises different functional dependencies in several different value ranges of the wind speed or its related parameter.

2. Method according to claim 1, **characterized in that** the value of the limit function corresponds to a first limit value a_{Grenz0} or runs below the first limit value a_{Grenz0} during low wind speeds below 3 to 10 m/s, in particular below a start speed vₛₜₐᵣₜ of the wind turbine, decreases towards middle wind speeds, in particular between v_{Start} and a first wind speed limit value v_{Wind0} with v_{Wind0} > v_{Start}, and increases towards a value, in particular between a second wind speed limit value v_{Wind2} and a third wind speed limit value v_{Wind2} with v_{Wind2} > v_{Wind1} > v_{Wind0}, which is greater than the limit value a_{Grenz0}.

3. Method according to claim 1 or 2, **characterized in that** the limit function depends on at least one second parameter for one or more meteorological special conditions and/or operational special conditions, wherein the limit function comprises in particular a constant or a wind speed depending correction term a_{GrenzOffset}, which is added to the tower oscillation limit value during occurrence of meteorological special conditions and/or operational special conditions.

4. Method according to one of the claims 1 to 3, **characterized in that** a positive additive term or offset is added for 1 to 10 minutes during a change of the operating status to another one.

5. Method according to one of the claims 1 to 4, **characterized in that** the value of the limit function does not fall below a least first limit value a_{Grenz1}, which is applied in particular at a middle wind speed or in a middle wind speed range.

6. Method according to one of the claims 1 to 5, **characterized in that** the value of the limit function does not exceed a highest second limit value a_{Grenz2}, which is applied in particular at high wind speeds.

7. Method according to one of the claims 1 to 6, **characterized in that** an averaging duration for the tower oscillations is greater than an averaging duration for the current wind speed, in particular by at least a factor of 5, in particular by at least a factor of 10.

8. Method according to one of the claims 1 to 7, **characterized in that** the moving average of the tower oscillations is averaged for a duration of several minutes, in particular between 2 and 20 minutes, and/or the moving average of the current wind speed is averaged for a duration of several seconds, in particular between 10 and 60 seconds.

9. Method according to one of the claims 1 to 8, **characterized in that** a tower acceleration is measured as a measurand for the tower oscillations.

10. Method according to one of the claims 1 to 9, **characterized in that** two different limit functions are applied for tower oscillations in direction of the rotor axis and for tower oscillations within a plane perpendicular to the rotor axis.

11. Wind turbine with a tower, an azimuth adjustable nacelle arranged on the tower and a rotor, which comprises at least one blade angle adjustable rotor blade, at least one measuring device, which is designed and arranged to measure tower oscillations, and an operational control device, which in particular comprises a data processing system with an operational control software, which is designed to monitor the tower oscillations and to shut down a power operation of the wind turbine when exceeding a tower oscillation limit value by a moving average of the tower oscillations, **characterized in that** at least one limit function is defined as tower oscillation limit value in the operational control device, in particular in the operational control software, which depends on, in particular a moving average of, the current wind speed and/or a parameter related to the wind speed and which comprises different functional dependencies in several different ranges of the wind speed or its related parameter.

12. Wind turbine according to claim 11, **characterized in that** the operational control device is designed, in particular by the operational control software, to execute a method according to one of the claims 1 to 10.

## Revendications

1. Procédé d'exploitation d'une éolienne comprenant une tour, une gondole à réglage azimutal disposée sur la tour et un rotor présentant au moins une pale de rotor à angle de pas réglable, les vibrations de la tour étant détectées et surveillées pendant le fonctionnement de l'éolienne au moyen d'au moins un dispositif de mesure et la génération de puissance par l'éolienne étant désactivée lorsqu'une grandeur mesurée, en particulier une moyenne glissante, des vibrations de la tour dépasse une valeur de seuil des vibrations de la tour. **caractérisé en ce que**, au moins pendant un fonctionnement en charge de l'éolienne, on définit la valeur de seuil des vibrations de la tour sous la forme d'au moins une fonction de seuil qui dépend, en particulier d'une moyenne glissante de la vitesse du vent qui souffle et/ou d'un paramètre lié à la vitesse du vent et qui présente différentes dépendances fonctionnelles dans plusieurs plages de valeurs différentes de la vitesse du vent ou du paramètre qui y est lié.

2. Procédé selon la revendication 1, **caractérisé en ce que** la valeur de la fonction de seuil correspond à une première valeur de seuil aₛₑᵤᵢₗ₀, lorsque les vitesses faibles du vent sont inférieures à 3 à 10 m/s, en particulier inférieures à une vitesse de démarrage vₛₐᵣₜ de l'éolienne, ou bien est inférieure à la première valeur de seuil aₛₑᵤᵢₗ₀, diminue pour atteindre des vitesses de vent moyennes, en particulier comprises entre vₛₐᵣₜ et une première valeur de seuil de la vitesse du vent vᵥₑₙₜ₀ avec vᵥₑₙₜ₀ > vₛₐᵣₜ et augmente pour atteindre de grandes vitesses de vent, en particulier comprises entre une deuxième valeur de seuil de la vitesse du vent vᵥₑₙₜ₁ et une troisième valeur de seuil de la vitesse du vent v_{Wind2} avec v_{Wind2} > v_{wind1} > v_{wind0}, jusqu'à une valeur supérieure à la valeur de seuil aₛₑᵢₗ₀.

3. Procédé selon la revendication 1 ou la revendication 2, **caractérisé en ce que** la fonction de seuil dépend d'au moins un deuxième paramètre pour une ou plusieurs conditions météorologiques particulières et/ou des conditions d'exploitation particulières, la fonction de seuil comprenant en particulier un terme de correction a_{seuiloffset} constant ou dépendant de la vitesse du vent, terme de correction qui est additionné à la valeur de seuil des vibrations de la tour lors de la survenance de conditions météorologiques particulières ou de conditions d'exploitation particulières.

4. Procédé selon l'une quelconque des revendications 1 à 3, **caractérisé en ce qu'**un terme additif positif ou offset est ajouté, lors d'un changement d'un état d'exploitation, à un autre pendant 1 à 10 minutes.

5. Procédé selon l'une quelconque des revendications 1 à 4, **caractérisé en ce que** la valeur de la fonction de seuil n'est pas inférieure à une première plus petite valeur de seuil appliquée en particulier à une vitesse moyenne du vent ou dans une plage de vitesse moyenne du vent.

6. Procédé selon l'une quelconque des revendications 1 à 5, **caractérisé en ce que** la valeur de la fonction de seuil n'est pas supérieure à une deuxième plus grande valeur de seuil appliquée en particulier à de grandes vitesses du vent.

7. Procédé selon l'une quelconque des revendications 1 à 6, **caractérisé en ce qu'**une durée d'appréciation des vibrations de la tour est supérieure à une durée d'appréciation de la vitesse du vent dominante, en particulier d'au moins un facteur de 5, en particulier d'au moins un facteur de 10.

8. Procédé selon l'une quelconque des revendications 1 à 7, **caractérisé en ce que** la moyenne glissante des vibrations de la tour est calculée sur une durée de plusieurs minutes, en particulier entre 2 et 20 minutes et/ou la moyenne glissante de la vitesse du vent dominante est calculée sur une durée de plusieurs secondes, en particulier entre 10 et 60 secondes.

9. Procédé selon l'une quelconque des revendications 1 à 8, **caractérisé en ce que** la grandeur mesurée pour les vibrations de la tour est une accélération de la tour.

10. Procédé selon l'une quelconque des revendications 1 à 9, **caractérisé en ce que** deux fonctions de seuil différentes sont appliquées pour les vibrations de la tour en direction de l'axe de rotor et pour les vibrations de la tour sur un plan perpendiculaire à l'axe de rotor.

11. Eolienne comprenant une tour, une gondole à réglage azimutal disposée sur la tour et un rotor présentant au moins une pale de rotor à angle de pas réglable, au moins un dispositif de mesure, configuré et disposé pour détecter les vibrations de la tour, ainsi qu'un dispositif de commande de l'exploitation comprenant, en particulier, un système de traitement des données équipé d'un logiciel de commande de l'exploitation créé pour surveiller les vibrations de la tour et déconnecter une génération de puissance de l'éolienne en cas de dépassement d'une valeur de seuil des vibrations de la tour à l'aide d'une moyenne glissante des vibrations de la tour, **caractérisée en ce que**, dans le dispositif de commande de l'exploitation, en particulier dans le logiciel de commande de l'exploitation, au moins une fonction de seuil est définie en tant que valeur de seuil des vibrations de la tour, laquelle fonction dépend, en particulier d'une moyenne glissante, de la vitesse du vent qui souffle et/ou d'un paramètre lié à la vitesse du vent et présente des dépendances fonctionnelles différentes dans plusieurs plages de valeurs différentes de la vitesse du vent et du paramètre qui y est lié.

12. Eolienne selon la revendication 11, **caractérisée en ce que** le dispositif de commande de l'exploitation, en particulier au moyen du logiciel de commande de l'exploitation, est configuré pour réaliser un procédé selon l'une quelconque des revendications 1 à 10.
